# EUROPEAN PATENT APPLICATION

(11) **EP 1 206 069 A1**
(43) Date of publication of application: **15.05.2002**
(21) Application number: 01124289.8
(22) Date of filing: 18.10.2001
(51) Int. Cl.: H04L 12/28

(54) **Quality of service maintenance of a wireless link in a wireless LAN**

(30) Priority: 08.11.2000 US 708161
(71) Applicant: AT&T Corp., New York, NY 10013-2412 (US)
(72) Inventor: Chow, Albert T., Hillsdale, New Jersey 07642 (JP); Kim, Jinman, Chatham, New Jersey 07928 (JP); Miller, Robert Raymond, II, Convent Station, New Jersey 07960 (JP); Ying, Wenchu, Cedar Knolls, New Jersey 07927 (JP)
(74) Representative: Modiano, Guido, Dr.-Ing.

(57) **Abstract**

To provide suitable QoS in a WLAN distributing voice, data and multimedia broadband in an end-to-end context, RF link errors are monitored in real time and applied as input to recovery and corrective procedures. The performance measures considered in normally evaluating a link QoS include throughput (bandwidth), delay, jitter and bit error rate (BER) but these alone do not properly evaluate a QoS for real-time services. In the exemplary embodiment, the frame error rate (FER) is compared with a threshold to define quality. If the error threshold is exceeded recovery procedures are instituted to restore the desired signal quality. The exemplary WLAN system has a capacity for providing isochronous services, such as broadband multimedia (including high speed video) and real-time toll quality voice service, and includes real time error detection and recovery procedures to maintain a desired individualized Quality of Service (QoS) appropriate for individual services.

## Description

### Field of the Invention:

This invention relates to Wireless Local Area Networks (WLAN) and in particular to maintenance of the Quality of Service (QoS) of the wireless link and specifically for a process maintaining QoS for isochronous services.

### Background of the Invention:

Broadband media in combination with voice and data is now being delivered to home/business premises by cable, wireless, DSL etc. Once delivered the main task is to deliver to various applications within the premises and to maintain a predetermined quality of service (QoS). One promising method is to use wireless local area networks (WLANs) with an appropriate QoS mechanism for the various applications of voice and data.

Wireless LANs are rapidly being accepted by the business world because of the flexibility permitted in wireless work station locations over that of wired LANs. This pace of acceptance is accelerating since the adoption of the IEEE 802.11 wireless LAN standard. Wireless LAN advantageously establishes a virtual network environment, which allows flexibility of employee location and eliminates the wireline requirements of a wired LAN.

Use of wireless LANs initially concerned data applications, however this has now been expanded to include all types of services including voice and broadband applications. Maintenance of quality of service (QoS) of received services is yet to be determined since no present standard covers this aspect.

### Summary of the Invention:

To provide suitable QoS in a WLAN distributing voice, data and broadband multimedia in an end-to-end context, RF link errors are monitored in real time and applied as input to recovery and corrective procedures. The performance measures considered in normally evaluating a WLAN link QoS include throughput (bandwidth), delay, jitter and bit error rate (BER) but these alone do not properly evaluate a QoS for real-time services. In the exemplary embodiment, the frame error rate (FER) is compared with a threshold to define quality. If the error threshold is exceeded recovery procedures are instituted to restore the desired signal quality.

An exemplary WLAN system having capacity for providing isochronous services, such as broadband multimedia (including high-quality video) and real-time toll quality voice service, includes real time error detection and recovery procedures to maintain a desired individualized Quality of Service (QoS) appropriate for individual services.

A frame error rate (FER) is determined by using a frame check sequence (FCS) count to determine the number of frame errors. FCS errors are accumulated in a counter located in a mobile station and Access Point (AP). The FCS error count is used by an Access Point (AP) to compute a FER. If the FER exceeds a threshold, the wireless link is tuned to a better quality link. The timing beacons of the WLAN synchronize the switching of a RF link.

### Brief Description of the Drawing:

FIG. 1 is a schematic of an exemplary wireless LAN serving multiple dwelling units;
FIGs. 2A and 2B are flow charts describing detection procedure by STA and link recovery procedure by AP, respectively, in the system of FIG. 1; and
FIG. 3 is a schematic of a timing chart to exemplify the link recovery procedures in FIG 2B with respect to the WLAN system beacons to obtain a desired QoS.

### Detailed Description:

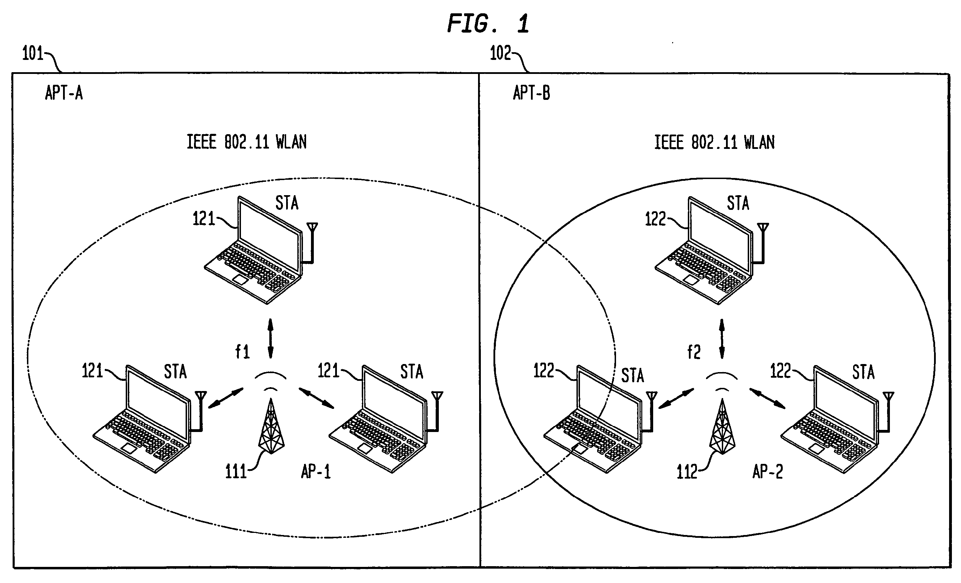

Neighboring dwelling units 101 and 102 located in a multiple-dwelling building such as shown in the FIG. 1 each include wireless LANs which comply with IEEE 802.11 standard (Media Access Control {MAC} protocol) governing mechanisms of data, voice and other media transfer. Each individual unit 101 and 102 includes an access point (i.e., AP) 111 and 112, respectively. These access points 111 and 112 communicate by wireless with various application stations 121 and 122, respectively. AP 111 operates with a wireless frequency of f₁ and AP 112 operates with a wireless frequency of f₂. It may be that f₁ of one WLAN and f₂ or the other WLAN are equal or very close in frequency. According to the invention if the one frequency of one WLAN causes RF link degradation in the performance of the other WLAN the degraded wireless system may select an interference free frequency using the link recovery procedures of the invention.

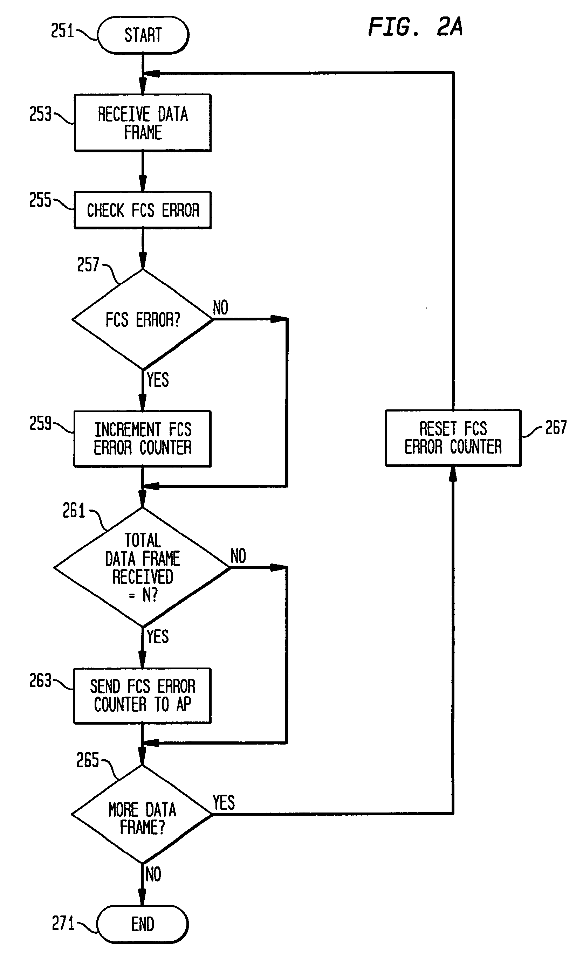

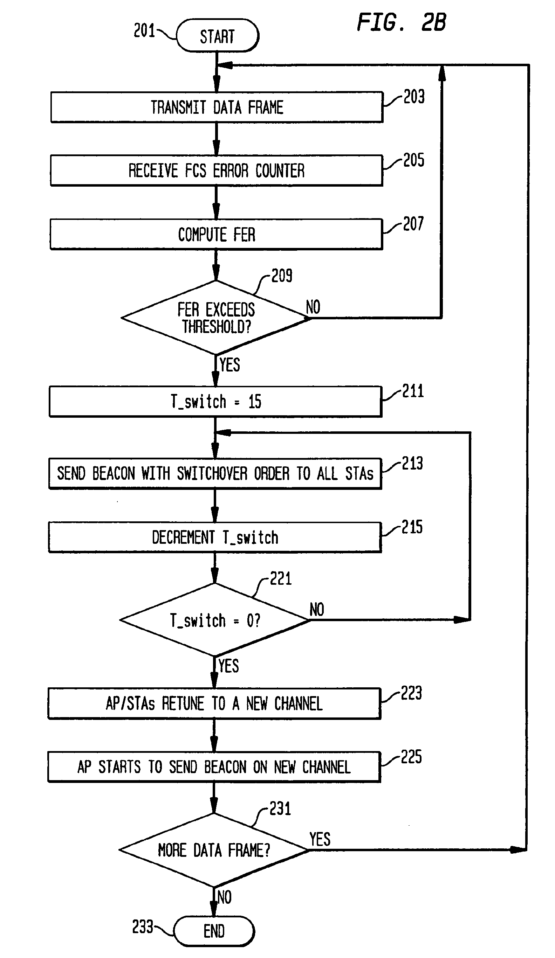

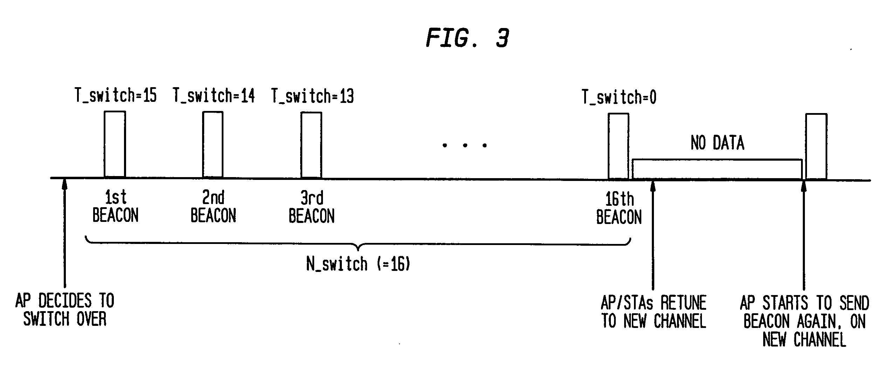

The detection of channel degradation and recovery procedures is accomplished by distinct sequential procedural steps in accord with IEEE 802.11 requirements. Initially the system detects link degradation by computing the FER and comparing it with a threshold defining a QoS requirement. Deviation of the FER from that threshold (i.e., FER exceeds the threshold) indicates a degradation of a link. The quality of other channels of appropriate frequency in the system are also measured and automatic link recovery proceeds according to a precise switchover. The precise steps are delineated by the following flow charts of FIGs. 2A and 2B. The timing chart of FIG. 3 indicates the link recovery procedure with respect to the WLAN system beacons.

In the illustrative embodiment, a system frame includes data frames and control frames, which are transmitted in both a contention period (CP) and a contention free period (CFP). These two intervals, one CP and one CFP, in sequence, define a superframe. All frames are ended with a frame check sequence (FCS) which determines the accuracy of the received frame with the transmitted frame. In determining QoS, a counter at a transmitting end is used to count frames transmitted and not acknowledged.

The nature of the timing and the related framing format for the link recovery procedures are in accord with the graph of FIG. 3. Both APs and STAs share precise communication intervals based on a particular framing format. Frames are formatted according to the IEEE 802.11 standard. All frames include a frame check sequence (FCS) which enables the frame to be checked for corruption. FCS errors are counted to compute a frame error rate (FER) which is used to assess a RF link quality. In one embodiment, a threshold is established for an acceptable FER, which establishes an acceptable link quality.

The wireless LAN, in the illustrative embodiment, contemplates that data frames and control frames may be transmitted in both contention free periods and contention periods. An interval of a CFP followed by a CP is identified as a superframe, which is of a fixed duration. Data loss is dependent upon the size of the superframe hence large superframe sizes could lead to large data loss. This must be taken into account when establishing a FER threshold.

The process of determining a frame error rate (FER) begins by operations performed by the STAs and APs. Each AP and STA maintains two counters, one counter for counting frames and another counter for counting transmit errors (i.e., frames sent but not acknowledged). Frames that fail the FCS are discarded at the receiving end. The transmitting terminus increments the FCS error counter when an acknowledgement of receipt was not received. The STAs periodically send reports to their AP, which are used by the AP to determine the FER state. This FER state may be weighted (i.e., some or all of the FCS may be counted) to obtain a contracted quality of service (QoS) measure.

The corresponding process of the mobile or fixed wireless station is disclosed by the flow chart of FIG. 2A wherein after a start the STA receives a data frame as indicated by block 253. This frame is checked for FCS errors, as per block 255. If a FCS error is found, flow from the decision block 257 proceeds to the instruction of block 259 to increment the error counter. If there is no FCS error block 259 is bypassed and the flow proceeds directly to block 261, which checks if the total number of the data frame received equals to N. If so, the STA sends the FCS error count to the AP. If there are more data frames to transmit, in response decision block 265, flow returns to instruction block 253 after resetting an FCS error counter to zero as per block 267, and the above process is repeated. If there are no more data frames to be transmitted, the process ends at end terminal 271.

In performing these functions the AP maintains a database of these measurements and uses these measures to maintain required link quality or to switch to another better quality link. Its operation, in substituting a new link, is described in the flow chart of FIG. 2B with the process beginning at the start terminus 201. A data frame is transmitted as per instructions of block 203 and a FCS error counter is received at the AP, as per block 205. This count is used to compute a FER as indicated by block 207 and a decision is made as to whether this FER exceeds a quality determined threshold in decision block 209. If the decision is "yes", the T_Switch value is set to 15, per instruction block 211. This value is selected for illustrative purposes and is not intended to be limiting. (The T_Switch timing function is described below with reference to FIG. 3.) If the decision is "no" the flow process returns to the start locus 201 and the initial steps just described are repeated.

In the subsequent instruction block 213 a timing beacon is transmitted and in block 215 the T_Switch value is decremented. Subsequent decision instruction block 221 inquires if the value for T_Switch is zero. If not the flow returns to block 213 and the value for T_Switch is decremented with transmission of the next beacon. If the value for the T_Switch is now zero (i.e., a yes), the AP and STAs retune to a new channel, as per block 223, to replace the degraded link. The AP now starts to send a beacon on the new channel as per block 225 and a subsequent decision in decision block 231 inquires if there are more data frame to transmit and receive. If not the substitution process ends. If there are more data frame the flow returns to the start at terminus 201 and the process is repeated by transmitting a data frame.

The AP keeps a running record of these periodic measurements for the entire system that it serves so that if recovery is needed the best replacement links, for substitution of a degraded or failed link, may be promptly selected. These measurements prevent a substitution in which a substitute link of a neighboring system has its own problems of interference or other degradation. A significant consideration of this process is the synchronization of the switchover orders to another channel with the system synchronization. Synchronization of a wireless LAN is determined by beacon defined frames (i.e., defined by transmitted sync pulses) which are periodically transmitted from the AP to the STAs. For illustrative purposes, a N_Switch time interval herein includes 16 beacons. A switchover order of the AP includes a new channel number and a value T_Switch which represents the number of a Beacon frame after which switchover should occur. The AP maintains a T_Switch count and decrements that number by one as each beacon is transmitted when a switchover is to be performed.

The graph of FIG. 3 illustrates this beacon frame transmission to illustrate how the switch over is related to the system timing. Beacons are timing marks used in WLANs to synchronize system operation. The graph shows 16 beacons and how they are related to the switch over. When a switchover is ordered the AP sends a switchover order with the first beacon (T_switch = 15). The AP repeats the switchover order with transmission of the subsequent beacon (T_Switch = 14) and continues to send switchover orders for N_Switch consecutive transmission of beacons. This series of transmissions of beacons, before actual switchover occurs, allows for a recovery should a STA miss a switchover order due to a bad RF link and provides sufficient lead time to permit STAs to get ready for a switchover. It is preferable that the N_Switch value be greater than the number of beacons that a STA is allowed to skip during its power save mode.

When a STA receives the switchover order it retunes to the new channel just after the receipt of the N_Switch-th beacon in a quiescent period in which no data is sent. Once switchover has occurred, the AP and STA communicate on the new channel. The same protective measures, such as monitoring FCS and determining a FER are continued.

The above-described system incorporates an exemplary link quality control has been disclosed in a particular WLAN. It is to be understood that many varied versions and applications of this embodiment may be devised by those skilled in the art without departing from the spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method of providing a quality of service involving wireless transmissions of real-time signals over a WLAN (wireless Local Area Network) link, comprising the steps of:
transmitting varied services from an Access Point/Station (AP/STA) to varied receiving devices of the WLAN by wireless link/transmissions;
setting a threshold of quality of service (QoS) for each individual service;
identifying links below said threshold as degraded links;
measuring a quality of other channels in the system to determine qualified transmission channels; and
initiating automatic link recovery procedures to switch transmission to a new transmission channel, to recover a desired quality link, in response to the steps of measuring and identifying.

2. The method of claim 1, wherein the step of identifying includes steps at the access point (AP) of:
computing a frame error rate (FER) from a frame check sequence (FCS);
setting the threshold of QoS in terms of a FER;
determining if a wireless link has a FER exceeding the threshold.

3. The method of claim 2, wherein the step of identifying includes steps at the station (STA) of:
checking for frame check sequence (FCS) errors and incrementing an error counter for each FCS found; and
sending FCS counts to the access point (AP).

4. The method of claim 3, wherein the step of initiating includes steps of:
transmitting a switchover order inside WLAN beacons after a designated beacon has transmitted.

5. In a wireless local area network (WLAN) a system process control for providing a quality of service (QoS) for wireless transmissions of voice, data, and broadband multimedia which includes steps of:
determining an error rate of transmitted frames;
comparing the error rate to a preset error rate threshold;
using the comparison to determine is a transmitting link is degraded beyond an acceptable QoS.

6. The process of claim 5, wherein:
an error rate is determined by evaluating a frame check sequence (FCS) for each frame transmitted and counting the number of FCSs found.

7. The process of claim 6 wherein:
switching a channel to a new better quality link in response to an undesirable error rate.

8. The process of claim 7 wherein:
the switching of a channel is processed by an access point (AP) which maintains a count of FCSs occurring.

9. The process of claim 8 wherein:
the switching of a channel is synchronized with synchronizing beacons of the wireless local area network (WLAN).

10. The process of claim 9 wherein:
the switching of a channel occurs only after a predetermined sequence of beacons have been counted to accommodate a skipping of beacons due to a power down mode; and
including an interval of no data following a beacon allowing a re-tuning to a new channel.
